# EUROPÄISCHE PATENTANMELDUNG

(11) **EP 0 997 340 A1**
(43) Veröffentlichungstag der Anmeldung: **03.05.2000**
(21) Anmeldenummer: 99810949.0
(22) Anmeldetag: 20.10.1999
(51) Int. Cl.: B60M 3/00

(54) **Verfahren zur Steuerung der Energieverteilung auf einem Eisenbahnnetz**

(30) Priorität: 30.10.1998 DE 19850051
(71) Anmelder: ABB RESEARCH LTD., 8050 Zürich (CH)
(72) Erfinder: Dzung, Dacfey, Dr., 5430 Wettingen (CH)
(74) Vertreter: Clerc, Natalia

(57) **Zusammenfassung**

Zur effizienten Nutzung der Resourcen eines Eisenbahnnetzes (1) senden die einzelnen Triebwagen (2) einer Zentrale über ein Funknetzwerk (4) Informationen zu ihrem zukünftigen Leistungsbedarf zu. Die Zentrale (3) analysiert die so erhaltenen Daten und teilt den Triebwagen (2) mit, wieviel Leistung sie maximal beziehen dürfen. Auf diese Weise können unerwünschte Leistungsspitzen im Netz vermieden werden.

## Beschreibung

### Technisches Gebiet

Die Erfindung betrifft ein Verfahren zur Steuerung der Energieverteilung auf einem Eisenbahnnetz gemäss Oberbegriff von Anspruch 1.

### Stand der Technik

Elektrische Eisenbahnnetze sind mit einem Stromversorgungsnetz ausgerüstet, welches den Triebwagen elektrische Energie über Fahrleitungen oder Stromschienen zuführt. Um Überlastungen zu vermeiden, müssen in solchen Netzen grosse Reserven vorgesehen sein. Wenn z.B. gleichzeitig eine grosse Zahl von Triebwagen im Bereich einer wichtigen Eisenbahnstation anfahren, muss das Netz in der Lage sein, instantan die entsprechende Leistung zur Verfügung zu stellen. In anderen Worten muss das Netz so ausgelegt sein, dass es jederzeit Spitzen im Leistungsbedarf befriedigen kann, was eine Überdimensionierung des Netzes erforderlich macht.

### Darstellung der Erfindung

Es ist somit Aufgabe der vorliegenden Erfindung, ein Verfahren der eingangs genannten Art bereitzustellen, das die Spitzen im Leistungsbedarf zu reduzieren vermag.

Diese Aufgabe wird vom Verfahren gemäss Anspruch 1 gelöst.

Erfindungsgemäss findet also eine Kommunikation zwischen dem jeweiligen Triebwagen und der Zentrale statt, in welcher der Triebwagen zuerst Angaben zum gewünschten Energiebezug macht und die Zentrale sodann antwortet, wieviel Energie bzw. welche Leistung der Triebwagen tatsächlich beziehen kann. Die Zentrale kann auf diese Weise z.B. Leistungsspitzen vermeiden, indem sie den Energiebezug der Triebwagen limitiert oder gewissen Triebwagen (z.B. solchen, die momentan stehen) kurzfristig gar keine Energie zuweist.

Als Triebwagen im Sinne der Ansprüche sind auch Zugskompositionen mit mehreren Antriebseinheiten zu verstehen.

Vorzugsweise gibt der Triebwagen den gewünschten Energieverbrauch in einer zukünftigen Zeitspanne an, z.B. in Form des zeitlichen Verlaufs der erwarteten Leistungsaufnahme. Ebenso kann die Zentrale dem Triebwagen z.B. den zeitlichen Verlauf einer maximal erlaubten Leistungsaufnahme mitteilen.

Zusätzlich kann der Triebwagen auch eine untere Limite für den Verbrauch angeben, die es ihm z.B. erlaubt, eine vorgeschriebene Minimalgeschwindigkeit einzuhalten.

Die Daten, die der Triebwagen für seine Anfrage bei der Zentrale benötigt, werden vorzugsweise aus der gewünschten Beschleunigung bzw. Fahrgeschwindigkeit errechnet.

Mit der Anfrage kann der Triebwagen auch weitere Daten übermitteln, z.B. seinen Aufenthaltsort, seine Geschwindigkeit und seine momentane Verspätung. So kann die Zentrale z.B. Energie entsprechend der momentanen Verspätung den Triebwagen zuteilen.

Die Daten aus den Anfragen der Triebwagen werden in der Zentrale vorzugsweise dafür verwendet, den Stromverbrauch auf einzelnen Streckenabschnitten des Netzes vorherzusagen. Aus diesen Vorhersagen können die Energiemengen berechnet werden, die die einzelnen Triebwagen verbrauchen dürfen.

### Kurze Beschreibung der Zeichnungen

Weitere Ausführungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung eines Eisenbahnnetzes,
Fig. 2 ein Blockdiagramm der Steuerelektronik eines Triebwagens,
Fig. 3 das Energiebezugs-Protokoll zwischen einem Triebwagen und der Zentrale und
Fig. 4 gewünschte, minimale und maximale Leistungsaufnahme in Funktion der Zeit.

### Weg zur Ausführung der Erfindung

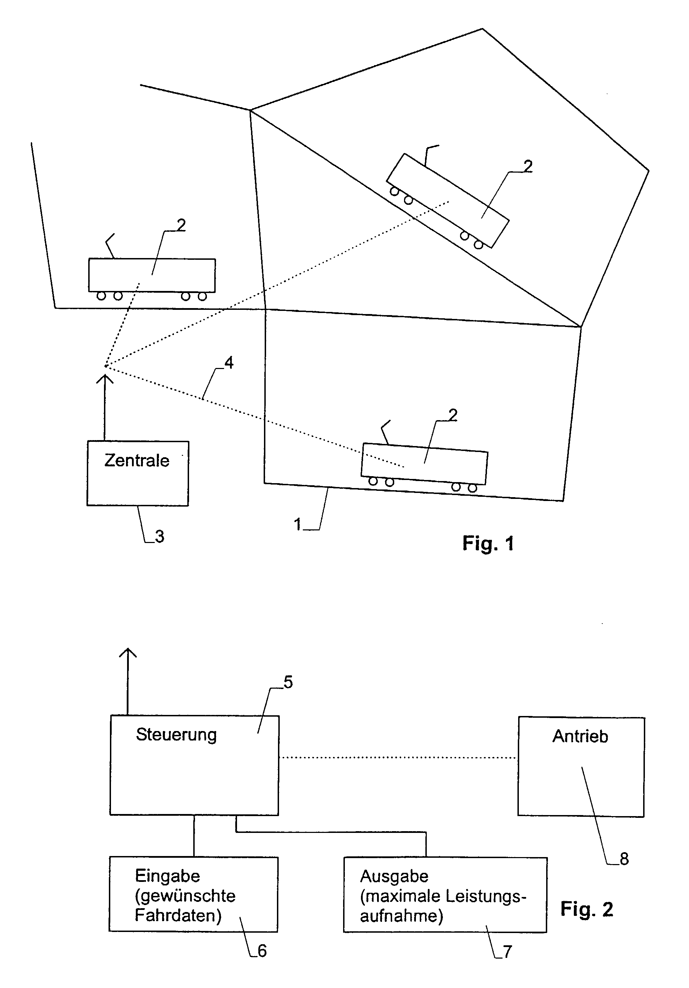

Fig. 1 zeigt ein Eisenbahnnetz 1 mit mehreren Triebwagen 2 und einer Zentrale 3. Zur Kommunikation zwischen den Triebwagen 2 und der Zentrale 3 ist ein Kommunikationsnetzwerk 4 vorgesehen, das den Austausch von Meldungen in Echtzeit (z.B. mit Verzögerungen von höchstens einer Sekunde) erlaubt. Hierbei kann es sich z.B. um ein Funknetz handeln.

Das Kommunikationsnetzwerk 4 dient dazu, den Leistungsbezug der Triebwagen 2 aufeinander abzustimmen. Hierzu ist, wie in Fig. 2 dargestellt, jeder Triebwagen mit einer Steuerung 5 ausgerüstet, die in Funkkontakt mit der Zentrale 3 steht. Die Steuerung ist mit einer Eingabe 6 verbunden, über die der Lokomotivführer die gewünschten Fahrdaten (Beschleunigung, Geschwindigkeit) eingibt. Aufgrund dieser Daten errechnet die Steuerung 5 den zu erwartenden Energieverbrauch bzw. den zeitlichen Verlauf der Leistungsaufnahme und sendet diese Werte an die Zentrale 3. Als Antwort teilt die Zentrale 3 dem Triebwagen die ihm zustehende Energiemenge bzw. den zulässigen Verlauf der Leistungsaufnahme mit. Diese Daten werden z.B. auf einer Anzeige 7 dargestellt oder sie werden direkt in Befehle zur Steuerung des Antriebs 8 des Triebwagens umgesetzt. Details des Ablaufs der Kommunikation zwischen der Zentrale 3 und den Triebwagen 2 werden weiter unten diskutiert.

Das Kommunikationsnetzwerk 4 dient weiter dazu, die Uhren der Triebwagen 2 zu synchronisieren, gegebenenfalls Statusmeldungen über den Zustand des Eisenbahnnetzes auszutauschen und die Positionen der Lokomotiven zu überwachen.

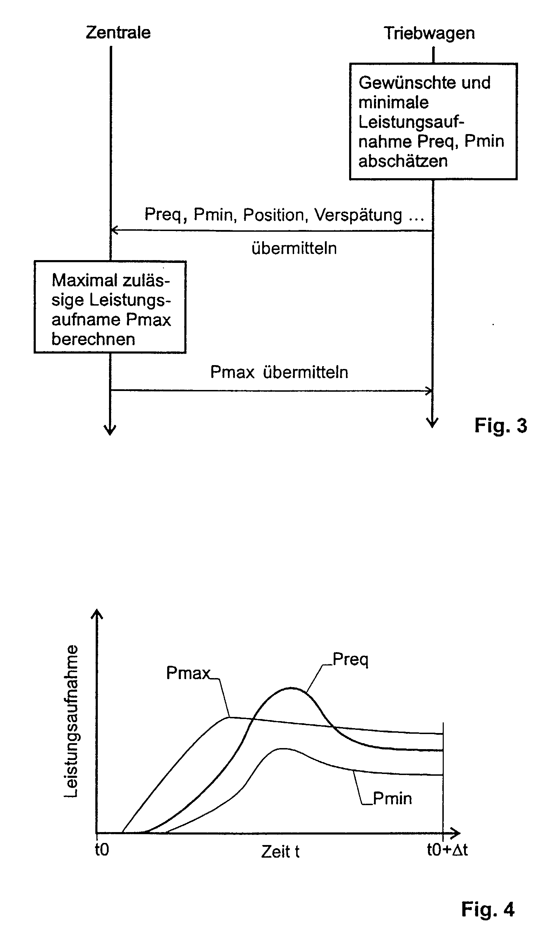

Fig. 3 zeigt das Energiebezugs-Protokoll zwischen einem Triebwagen 2 und der Zentrale 3, d.h. die Kommunikationsschritte, die dazu dienen, die Leistungsaufnahme der Triebwagen 2 zu steuern. Die in Fig. 3 gezeigten Schritte dienen zur Festsetzung der Leistungsaufnahme in einem Zeitraum t0 bis t0 + Δt, wobei t0 die momentane Zeit ist. Δt entspricht einen Zeitraum von z.B. 15 Sekunden, über den der Triebwagen ungefähr abschätzen kann, wie gross sein Leistungsbedarf sein wird. Die Schritte nach Fig. 3 werden im Betrieb dauernd wiederholt (z.B. jede Sekunde), so dass eine kontinuierliche, ständig aktuelle Steuerung der Leistungsaufnahme gewährleistet ist.

In einem ersten Schritt errechnet die Steuerung 5 des Triebwagens die erwartete Leistungsaufnahme P_{req}(t) für die Zeit t0 bis t0 + Δt. Ein typischer Verlauf dieser Leistungsaufnahme P_{req} für das Anfahren des Triebwagens ist in Fig. 4 dargestellt. Der Verlauf der Leistungsaufnahme wird aus den vom Lokomotivführer eingegebenen Fahrdaten ermittelt. Der Wert von P_{req}(t) kann negativ sein, wenn beim Bremsen Energie vom Bremssystem des Triebwagens ins Netz eingespiesen wird.

Weiter wird im Triebwagen die minimale Leistungsaufnahme Pₘᵢₙ(t) bestimmt (vgl. Fig. 4). Pₘᵢₙ(t) kann z.B. einfach ein Bruchteil der gewünschten Leistungsaufnahme P_{req}(t) sein. Die minimale Leistungsaufnahme ist dadurch definiert, dass der Triebwagen mit noch tieferer Leistungsaufnahme seine Aufgabe nicht erfüllen könnte, z.B. weil er nicht mit ausreichender Beschleunigung anfahren könnte oder weil er eine vorgeschriebene Minimalgeschwindigkeit nicht einhalten könnte.

Die gewünschte und die minimale Leistungsaufnahme werden sodann als Energiebezugs-Anfrage an die Zentrale 3 geschickt. Es können dabei verschiedenste Verfahren verwendet werden, um Pₘᵢₙ und P_{req} zu kodieren, beispielsweise mittels einzelner Punkte auf den jeweiligen Kurven oder durch Angabe wichtiger Kurvenparameter (z.B. Position und Amplitude der Spitzen). Es ist auch denkbar, lediglich die in einem Zeitabschnitt gewünschte Energiemenge anzugeben. Der gewünschte Energiebezug kann also teilweise oder detailliert angegeben werden.

Mit der Energiebezugs-Anfrage werden weitere Parameter übermittelt:
- Zugsverspätung: Die Verspätung wird z.B. errechnet aus einem Vergleich mit einem Fahrplan oder mit vom Fahrer angegebenen Richtwerten. Mit zunehmender Verzögerung erhält die Energiebezugs-Anfrage höhere Priorität.
- Zugsposition: Die Position des Triebwagens muss zumindest so genau angegeben werden, dass die Zentrale feststellen kann, in welchem Segment des Stromversorgungs-Netzwerks sich der Triebwagen befindet. Die Position kann z.B. aus Balisensignalen oder mittels Satellitennavigation bestimmt, oder (bei Verwendung eines zellulären Funknetzes) aus der jeweiligen Zellenidentität hergeleitet werden.
- Zugsgeschwindigkeit: Diese Information wird von der Zentrale 3 z.B. verwendet um festzustellen, ob der jeweilige Triebwagen steht oder sich in Fahrt befindet.
- Zugskategorie (Güterzug, Regionalzug, Direktzug, Hochgeschwindigkeitszug): ähnlich wie die Zugsverspätung kann die Zugskategorie eingesetzt werden, um den Anfragen verschiedener Triebwagen unterschiedliche Prioritäten zuzuordnen.

Aufgrund der Energiebezugs-Anfragen der verschiedenen Triebwagen kann die Zentrale 3 die Energieflüsse und andere Betriebsparameter des Netzes abschätzen. Daraus kann sie die Energien bzw. Leistungen bestimmen, die von den jeweiligen Triebwagen 2 bezogen werden dürfen. Entsprechend sendet sie auf jede Enegiebezugs-Anfrage eine Energiebezugs-Antwort, welche eine maximale Leistung Pₘₐₓ(t) (vgl. Fig. 4) angibt, die der Triebwagen dem Netz entziehen darf. Idealerweise entspricht Pₘₐₓ(t) etwa dem Wert von P_{req}(t) und zumindest ist Pₘₐₓ(t) ≥ Pₘᵢₙ(t). Zügen die im Moment stehen, kann auch gar keine Energie zugeteilt werden. Sie erhalten in diesem Fall die Instruktion, vor dem Start noch zusätzlich eine gewisse Zeit δ abzuwarten.

Die jeweilige maximale Leistung Pₘₐₓ(t) (oder gegebenenfalls eine Wartezeit δ) wird von der Zentrale 3 den Triebwagen 2 mitgeteilt. Auch hier kann die maximale Leistung Pₘₐₓ in Form einer detaillierten Kurve oder lediglich in Form gröberer Angaben (z.B. der zulässigen Energiemenge in einer Sekunde) spezifiziert werden.

Die Triebwagen werden sich in der Regel an die vorgegebene maximale Leistung Pₘₐₓ(t) halten und einzig in Notfällen grössere Leistungen beziehen. Wie bereits erwähnt kann hierzu die Leistung Pₘₐₓ(t) zusammen mit der momentan bezogenen Leistung auf der Anzeige 7 dargestellt werden, so dass der Fahrer die Möglichkeit hat, die bezogene Leistung zu überwachen und nötigenfalls zu reduzieren. Es ist jedoch auch denkbar, dass die Steuerung 6 direkt auf den Antrieb 8 einwirkt, um den Leistungsbezug entsprechend der Vorgaben der Zentrale zu beschränken.

Vorzugsweise arbeiten alle Triebwagen 2 auf dem Eisenbahnnetz 1 mit dem hier beschriebenen Energiebezugs-Protokoll. Es ist jedoch auch denkbar, dass nur ein Teil der Triebwagen mit einer entsprechenden Steuerung ausgestattet ist.

In dem in Fig. 1 dargestellten Eisenbahnnetz ist nur eine einzige Zentrale 3 abgebildet. Es können jedoch auch mehrere Zentralen vorgesehen sein, von denen jede z.B. autonom einen Teilbereich des Netzes überwacht.

### Bezugsziffern:

- 1:: Eisenbahnnetz
- 2:: Triebwagen
- 3:: Zentrale
- 4:: Kommunikationsnetzwerk
- 5:: Steuerung
- 6:: Eingabe
- 7:: Anzeige
- 8:: Antrieb
- δ:: Wartezeit
- Pₘᵢₙ:: minimale Leistung
- Pₘₐₓ:: maximale Leistung
- P_{req}:: gewünschte Leistung
- t:: Zeit
- t0:: Startzeitpunkt
- Δt:: Vorhersagezeitraum

## Patentansprüche

1. Verfahren zur Steuerung der Energieverteilung auf einem Eisenbahnnetz, wobei auf dem Eisenbahnnetz Triebwagen (2) verkehren, dadurch gekennzeichnet, dass mindestens ein Teil der Triebwagen (2) einem Energiebezugs-Protokoll folgen, welches zumindest folgende Schritte umfasst:
der Triebwagen sendet einer Zentrale (3) eine Energiebezugs-Anfrage, welche den gewünschten zukünftigen Energiebezug (P_{req}) des Triebwagens (2) mindestens teilweise spezifiziert und
die Zentrale (3) sendet dem Triebwagen (2) abhängig von Betriebsparametern des Eisenbahnnetzes eine Energiebezugs-Antwort, welche mindestens teilweise spezifiziert, wieviel Energie (Pₘₐₓ) der Triebwagen beziehen darf.

2. Verfahren nach Anspruch 1, dadurch gekennzeichnet, dass die Energiebezugs-Anfrage den gewünschten Energieverbrauch, insbesondere einen gewünschten zeitlichen Verlauf (P_{req}(t)) der Leistungsaufnahme, des Triebwagens in einer zukünftigen Zeitspanne (t0 bis t0+Δt) spezifiziert.

3. Verfahren nach Anspruch 2, dadurch gekennzeichnet, dass die Energiebezugs-Anfrage eine untere Limite (Pₘᵢₙ) für den gewünschten zukünftigen Energiebezug spezifiziert.

4. Verfahren nach einem der vorangehenden Ansprüche, dadurch gekennzeichnet, dass die Energiebezugs-Antwort den erlaubten Energieverbrauch, insbesondere einen zeitlichen Verlauf (Pₘₐₓ(t)) einer erlaubten Leistungsaufnahme, des Triebwagens in einer zukünftigen Zeitspanne (t0 bis t0+Δt) spezifiziert.

5. Verfahren nach Anspruch 4, dadurch gekennzeichnet, dass die Energiebezugs-Antwort eine obere Grenze des erlaubten Energieverbrauchs, insbesondere einen zeitlichen Verlauf einer maximalen Leistungsaufnahme, des Triebwagens spezifiziert.

6. Verfahren nach einem der vorangehenden Ansprüche, dadurch gekennzeichnet, dass im Triebwagen der gewünschte Energieverbrauch (P_{req}) abhängig von einer gewünschten Beschleunigung und/oder Geschwindigkeit errechnet wird.

7. Verfahren nach einem der vorangehenden Ansprüche, dadurch gekennzeichnet, dass die Energiebezugs-Anfrage den Aufenthaltsort des Triebwagens spezifiziert.

8. Verfahren nach einem der vorangehenden Ansprüche, dadurch gekennzeichnet, dass die Energiebezugs-Anfrage die Geschwindigkeit des Triebwagens (2) spezifiziert.

9. Verfahren nach einem der vorangehenden Ansprüche, dadurch gekennzeichnet, dass die Energiebezugs-Anfrage eine Verspätung des Triebwagens (2) spezifiziert und dass die Energiebezugs-Antwort abhängig von der Verspätung des Triebwagens errechnet wird.

10. Verfahren nach einem der vorangehenden Ansprüche, dadurch gekennzeichnet, dass die Zentrale (3) aufgrund der Energiebezugs-Anfragen der Triebwagen (2) Voraussagen zum Energieverbrauch auf mindestens einem Teils des Eisenbahnnetzes (1) macht.
